# EUROPEAN PATENT APPLICATION

(11) **EP 1 630 720 A1**
(43) Date of publication of application: **01.03.2006**
(21) Application number: 05018421.7
(22) Date of filing: 24.08.2005
(51) Int. Cl.: G06K 9/03, G06K 9/20

(54) **Luminous pattern scanning apparatus and method for scanning luminous pattern**

(30) Priority: 27.08.2004 JP 2004249025
(71) Applicant: KABUSHIKI KAISHA TOSHIBA, Tokyo (JP)
(72) Inventor: Nihommatsu, Morio, c/o K. K. Toshiba, Minato-ku, Tokyo (JP)
(74) Representative: Kramer - Barske - Schmidtchen

(57) **Abstract**

A luminous pattern scanning apparatus comprises an image producing means (11, 12, 13, 14; 11a, 12aa, 13a, 14a; 11b, 12b, 13b, 14b) to produce a first image of a prescribed brightness and a second image darker than the first image brightness, respectively from luminous pattern marked on medium in fluorescent ink emitting light upon receipt of exciting light, a scanning means (16; 16a; 16b) to obtain the scanning consequences of the first image and the second image by performing the pattern scanning process for the first and second images produced by the image producing means, a judging means (17) to evaluate the scanning consequences of the first and second images obtained by the scanning means and output one final scanning consequence, and is capable of scanning luminous pattern certainly from any media which is strongly breached and difficult to be scanned marked luminous pattern.

## Description

This application is based upon and claims the benefit of priority from the prior Japanese Patent Application 2004-249025 filed on August 27, 2004; the entire contents of which are incorporated herein by reference.

The present invention relates to a luminous pattern scanning apparatus and a, method for scanning luminous patterns marked on postal matters in luminous ink such as fluorescent ink that emits light upon receipt of exciting light in, for example, an automatic postal address-reading and sorting machine.

As disclosed in, for example, the Japanese Patent Applications 1997-319821 and 2000-57249, this kind of luminous pattern scanning apparatus illuminates exciting light on a postal matter having a barcode marked. The barcode that is excited by the exciting light and becomes luminous is scanned with a, CCD camera through an optical filter that transmits only the luminous wavelength light. The barcode is read by processing this scanned image.

Many postal matters are white-colored but some of them are strongly luminous by the strong breach degree of fluorescent breaching agent contained in paper. On such strongly breached postal matters, read images sparkles white as affected by the background light resulting from the breach and it is difficult to read barcodes.

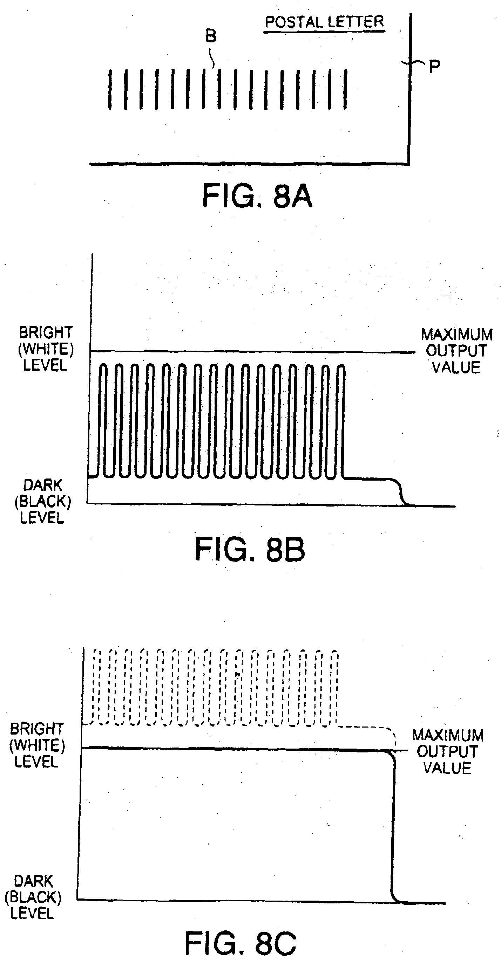

When the breached degree is weak, an image becomes as shown in FIG. 8B and when the breached degree is strong, an image becomes as shown in FIG. 8C. FIG. 8A shows Barcode B marked on a postal matter P. Shown in FIGS. 8B and 8C are images when this barcode B was scanned.

As a simple method to solve the problems described above, when a postal matter is scanned by making the exciting light dark, an image does not sparkles white because the background light arising by the breach is weak and a barcode can be read. However, in case of a dark postal matter without fluorescent breaching applied, an image will become darker when the exciting light is made dark and it becomes difficult to read a barcode.

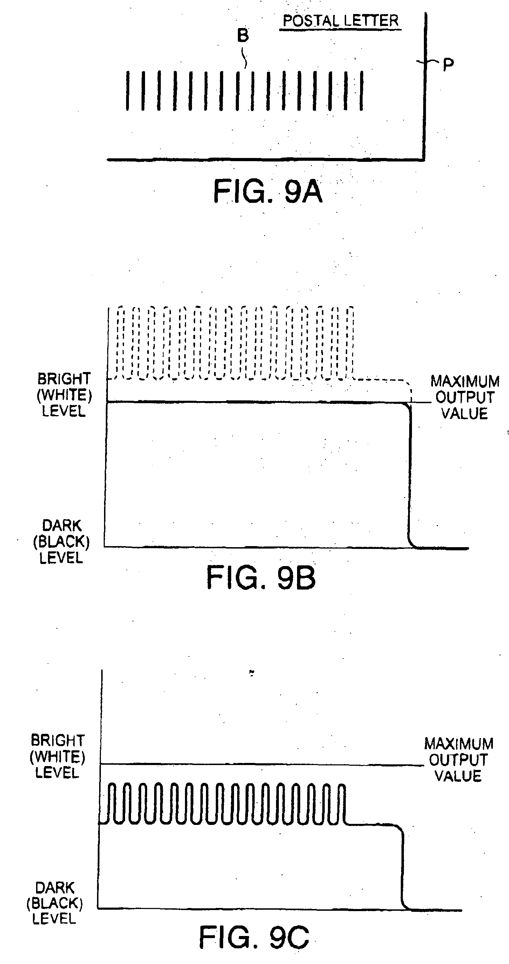

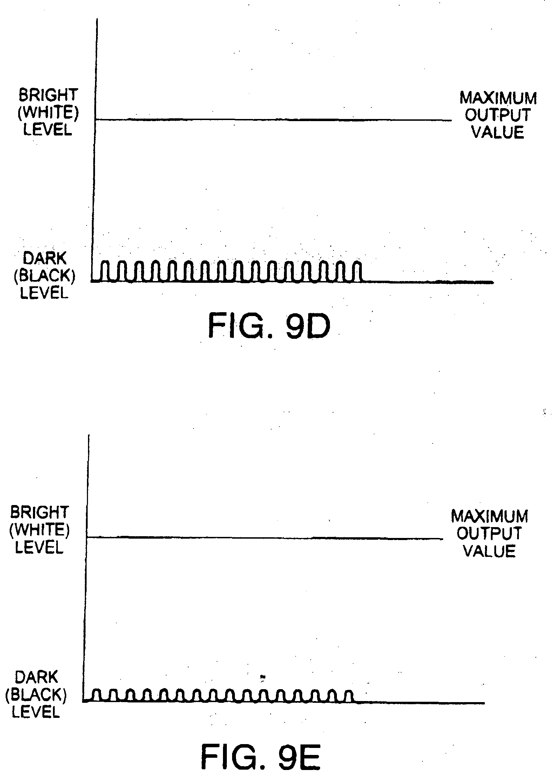

FIG. 9A shows barcode B marked on a postal matter P similarly to FIG. 8A. FIG. 9B shows an image when the breaching of a medium is strong. FIG. 9C shows an image of a strong breached medium when the exciting light was made dark. FIG. 9D shows an image of a dark color postal matter. FIG. 9E shows an image of a dark color postal matter when the exciting light was made dark.

An object of the present invention is to provide a luminous pattern scanning apparatus and a method for scanning luminous patter capable of surely scanning luminous patterns even for a medium that is difficult to be scanned its marked luminescent pattern affected by the background light for its strong breached degree.

According to an embodiment of the present invention, the luminous pattern scanning apparatus comprises an image producing means for producing a first image in a prescribed luminance and a second image darker than the luminance of the first image, respectively from a luminescent pattern marked on a medium in luminescent ink that emits light upon receipt of exciting light, a reading means to acquire read consequences of the first and second images, respectively by performing the pattern read process for the first and second images produced by the image producing means, and a judging means to evaluate the read consequences of the first and second images acquired by this read means and finally output one read consequence.

According to one embodiment of the present invention, a method for scanning luminous pattern comprises the steps of producing the first image in a prescribed brightness and a second image darker than the brightness of the first image from luminous patterns marked on medium in luminescent ink that radiates upon receipt of exciting light, performing the pattern read-process for the produced first and second images, producing the read consequences of the first and second images for the luminescent pattern, evaluating the read consequences of the produced first and second images, and finally outputting one read consequence.

Additional objects and advantages of the present invention will be apparent to persons skilled in the art from a study of the following description and the accompanying drawings, which are hereby incorporated in and constitute a part of this specification.

A more complete appreciation of the present invention and many of the attendant advantages thereof will be readily obtained as the same becomes better understood by reference to the following detailed description when considered in connection with the accompanying drawings, wherein:

FIG. 1 is a block diagram schematically showing the luminous pattern scanning apparatus in the first embodiment of the present invention;

FIG. 2 is a table for explaining an evaluation method by the judging unit;

FIG. 3 is a block diagram schematically showing the luminous pattern scanning apparatus in the second embodiment of the present invention;

FIG. 4 is a diagram for explaining the scanning of an image at a prescribed first resolution;

FIG. 5 is a diagram for explaining the scanning of an image at a resolution two time of the first resolution;

FIG. 6 is an explanatory diagram relative to the image scanning in the third embodiment of the present invention;

FIG. 7 is a timing chart for explaining the exposure time control signal of CCD in the scanning at different resolutions;

FIG. 8 is an explanatory diagram of a barcode image obtained from a breached postal matter according to a conventional reading method; and

FIG. 9 is an explanatory diagram of a barcode image obtained from a breached postal matter according to the reading method of the present invention

Preferred embodiments of the present invention will be explained below with reference to the attached drawings.

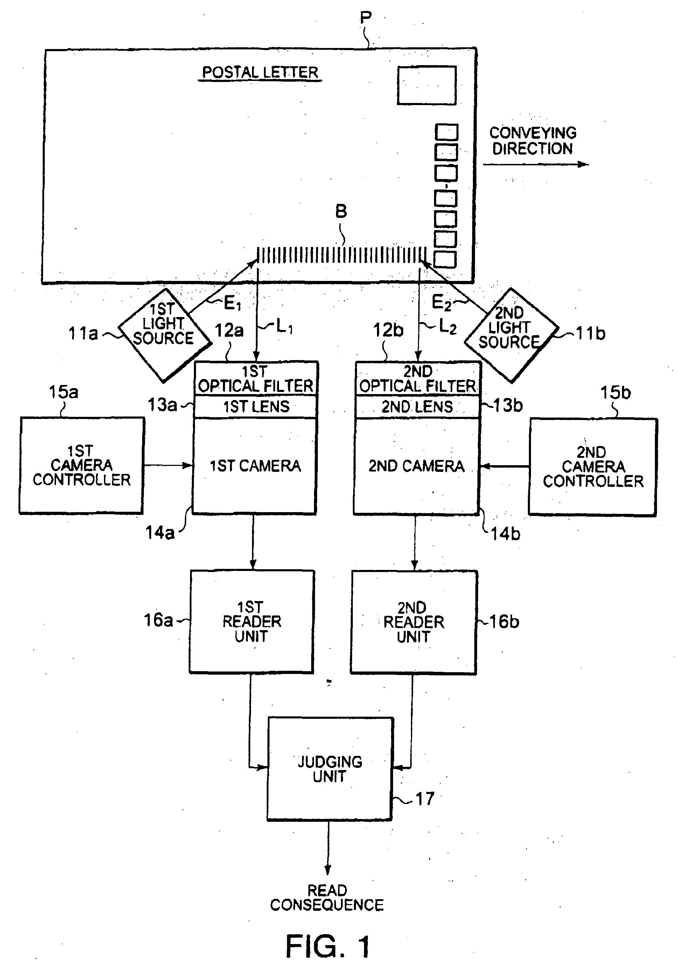

FIG. 1 schematically shows a luminous pattern scanning apparatus involved in the first embodiment. This apparatus is used, for example, in an automatic postal address-reading and sorting machine for reading barcodes marked on postal matters in luminescent ink and sorting postal matters based on the read consequence.

In FIG. 1, a medium i.e., a postal matter P is conveyed in the direction of an arrow as illustrated in an automatic postal address reading and sorting machine (not shown). On the postal matter, a barcode luminescent pattern B carrying coded address information is marked on the surfaces in fluorescent ink.

Exciting lights E1, E2 from first and second exciting light sources 11a, 11b are illuminated to the barcode marked potion on the postal matter P, respectively. The first exciting light source (hereinafter, referred as first light source) 11a illuminates the exciting light E1 in the prescribed brightness. The second exciting light source (hereinafter, referred as second light source) 11b illuminates the exciting light E2 that is darker than the light from the first light source 11a. Here, when the brightness of the exciting light E1 from the first light source 11a is assumed to be "1", the brightness of the exciting light E2 from the second light source 11b is, for example, "1/8". That is, the ratio of the exciting lights E1 and E2 is 8:1. Further, ultraviolet light or blue light is used for the exciting lights E1 and E2 from the first and second light sources 11a and 11b.

A light L1 emitted from a barcode by the exciting light E1 from the first light source 11a is incident into a first camera 14a through a first optical filter 12a that transmits its emitted light wavelength light only and a first lens 13a, and is photoelectric converted.

A light L2 emitted from a barcode by the exciting light E2 from the light source 11b is incident into a second camera 14b through an optical filter 12b that transmits its emitted light wavelength light and a lens 13b, and is photoelectric converted.

For the first and second cameras 14a, 14b, for example, a CCD camera using a CCD line sensor or an area sensor as an image sensor is used. The first and second cameras 14a, 14b are driven and controlled by first and second camera controllers 15a, 15b, respectively.

The first light source 11a, the first optical filter 12a, the first lens 13a, the first camera 14a and the first camera controller 15a comprise a first scanning means. The second light source 11b, the second optical filer 12b, the second lens 13b, the second camera 14b and the second camera 15b comprise a second scanning means. An image producing means is composed of these two scanning means.

A first image scanned by the camera 14a (hereinafter, called as a brightish image) is sent to a reader unit 16a that is a reading means. A second image (hereinafter, called as a darkish image) scanned by the second camera 14b is sent to a second reader unit 16b that is a reading means.

The first and second reader units 16a, 16b perform the barcode read processing for the brightish and darkish images obtained from the first and second cameras 14a, 14b, respectively. As a result, three kinds of read consequences are output; that is, no barcode, rejection, read-completion. In the case of the read-completion, the barcode decoding consequence is also output. The read completion denotes that a barcode was scanned and its decoding was completed without error. The rejection denotes that a barcode was scanned but an error was produced in its decoding and accordingly, it is indicated that its read-consequence is to be discarded. No barcode denotes that no barcode was scanned.

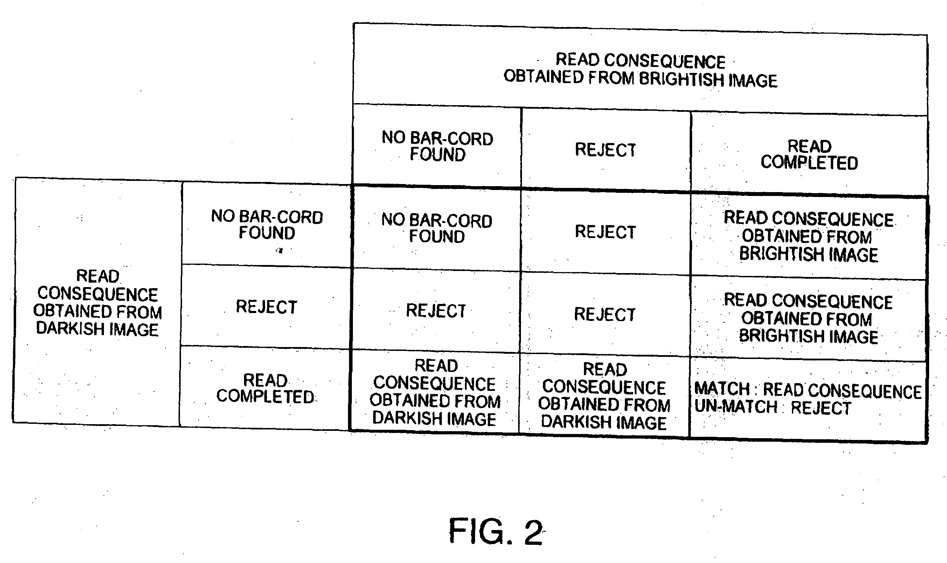

The read consequences of the first and second' reader units 16a, 16b are sent to a judging unit 17 that is a judging means, respectively. The judging unit 17 evaluates two read consequences according to the table shown in FIG. 2 and decides the final read consequence. When, for example, the read consequence of the reader unit 16a is "No Barcode" and the read consequence of the second reader unit 16b is "Read- Completion", the read consequence of the second reader unit 16b is regarded to be the final read consequence. When the read consequence of the first reader unit 16a is "Read-Completion" and the read consequence of the second reader unit 16b is "No Barcode", the read consequence of the reader unit 16a becomes the final scanning consequence.

Further, both of the read consequences of the brightish image and the darkish image of the first and second reader units 16a, 16b are "Read Completion", respectively and the decoding consequences of barcodes by the first and second reader units 16a, 16b match with each other, the final judgment becomes "Read-Completion". However, when the decoding consequences of the barcodes are un-match, the final judgment will become "Rejection".

Thus, the brightish image and the darkish image are generated by two scanning means of exciting light in different luminance. The read-process is executed for these two images and a barcode of a strongly breached postal matter for a brightish image cannot be read but a barcode of a postal matter having a darkish background can be read. The barcode B on the postal matter P having a dark background cannot be read for a darkish image but a barcode of a postal matter affected by the breach can be read. Accordingly, because either one of the barcode B can be read, it is possible to cope with both aspects of the postal matter P by one scanning.

That is, in case of a postal matter of which image is affected by the intense background light arising by the breach and tends to sparkle white, the barcode B is read from the darkish image. In case of the darkish postal matter P having a weak background light, the barcode B is read from the brightish image. Accordingly, the barcode B can be read on any aspect of postal matter P.

Now, a second embodiment will be explained. The second embodiment is so constructed as to produce a brightish image and a darkish image by one scanning means. Other elements in the second embodiment are the same as those of the first embodiment.

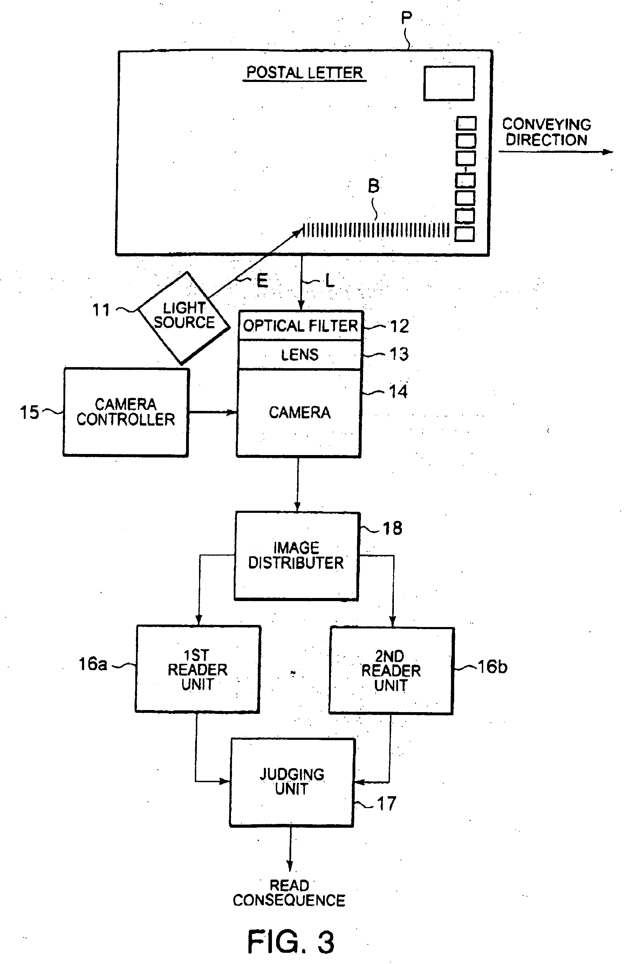

FIG. 3 schematically shows a luminescent pattern scanning apparatus of the second embodiment. The second embodiment features that there is only one scanning means. That is, in the second embodiment, there do not exist the second light source 11b, the second optical filer 12b, the second lens 13b, the second camera 14b and the second cameral controller 15b shown in FIG. 1 while an image distributor 18 is added

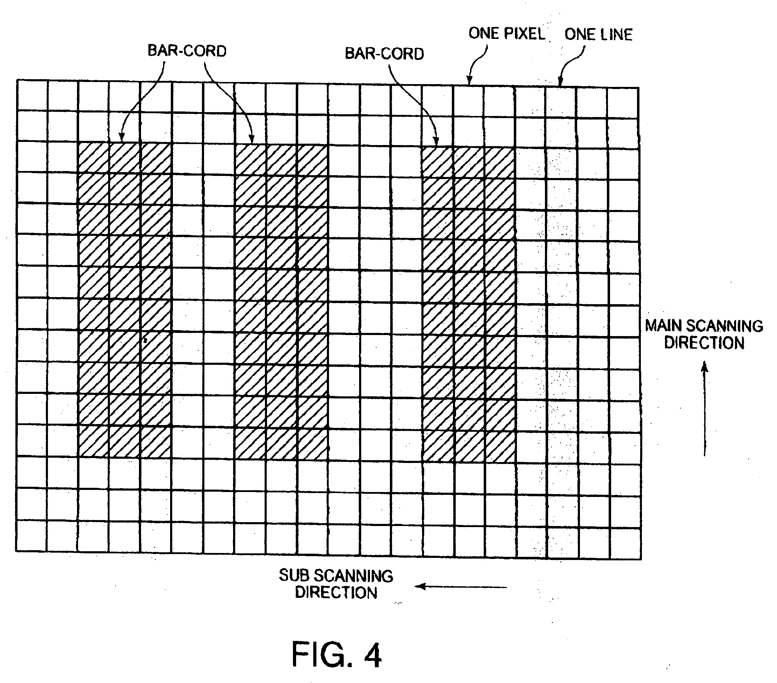

In general, when scanning a scanning object (e.g., the postal matter), an image of the scanning object is comparted in lattice meshes, and scanned in the longitudinal direction (main-scanning direction) and the transverse direction (sub-scanning direction) as shown in FIG. 4. The comparted meshes are so-called pixels and its brightness is proportional to the pixel area. The pixel string lined up in the main-scanning direction is called as the line.

In the second embodiment, two images are produced in one time scanning with one scanning means. Therefore, the barcode B is scanned at a desired resolution, for example, a high resolution more than two times of 125 dpi, for example, 250 dpi and a bright image (a brightish image) and a darker image (a darkish image) are produced. The method for producing these images will be described below in detail.

A brightish image is produced by summing all the plural pixels of desired low resolution image and the plural pixels of the high resolution image in the same area. At this time, when the consequence of the summing exceeds the maximum value of the pixels, this maximum value may be taken.

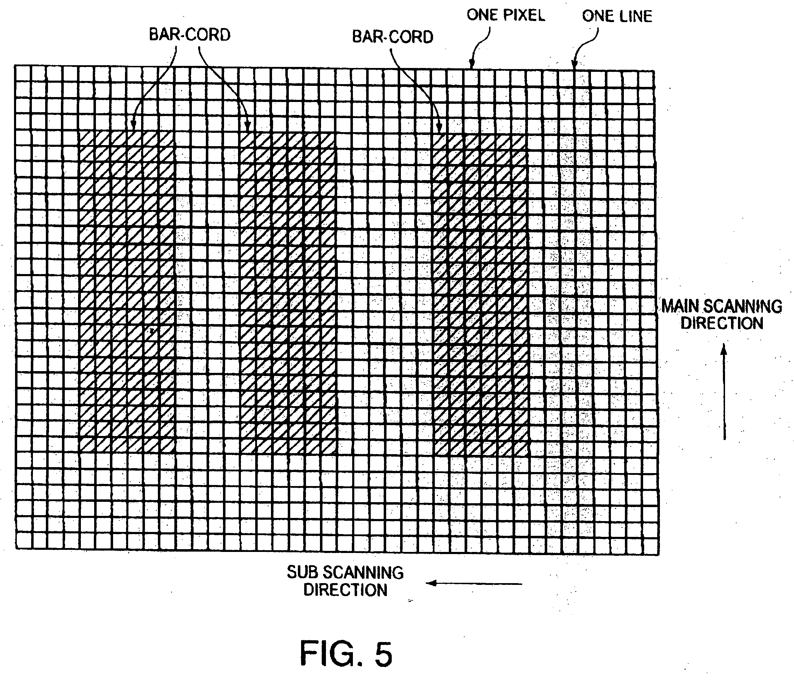

A darkish image is generated by partially thinning plural pixels of the high resolution image in the same area as the pixels of desired low resolution image. For example, in FIG. 5, a block of pixels arranged in a matrix plane corresponds to one pixel in FIG. 4.

As described above, the brightish image is generated by taking a sum of one desired low resolution pixel and four pixels in a matrix plane block at a high resolution in the same area, and a darkish image is generated by thinning, for example, one pixel of the longitudinal and transversal four pixels of high resolution in the same area as the one pixel of desired low resolution. The image distributor 18 provides the brightish image to the first reader unit 16a and provides the darkish image to the second reader unit 16b through such the processing. Further, the processing subsequent to the first and second reader units 16a, 16b are the same as the first embodiment and the explanation thereof will be omitted.

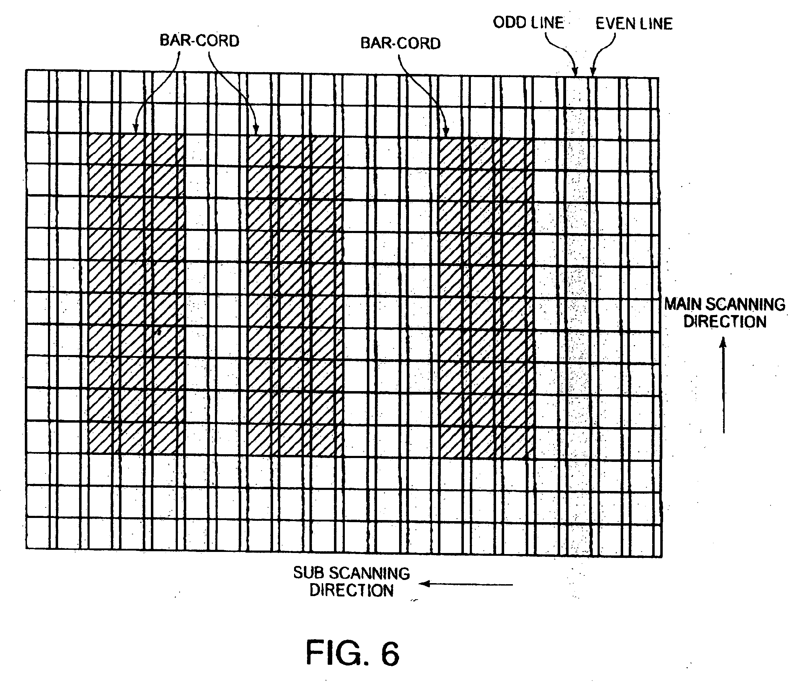

Now, a third embodiment will be explained with reference to FIG. 6. In the third embodiment, a brightish image and a darkish image are generated by one time of scanning with one scanning means according to a method differing from that in the second embodiment. Further, the luminous pattern scanning apparatus is in the same structure as the second embodiment (see FIG. 3) and therefore the illustration thereof will be omitted herein.

In the third embodiment, the barcode B is scanned by varying the pixel areas alternately for every line. For example, using a line CCD camera for the cameras 14, 14a, 14b the barcode B is scanned by varying the exposing width alternately for every line at a high resolution two-times the desired resolution in the sub-scanning direction; for example, 250 dpi.

Concretely, the exposing widths of the even lines are made narrower while the odd lines are made wider. However, the sum of the pixels of the even lines and the odd lines are made to the same as the number of line pixels at a desired resolution for example, 125 dpi. A darkish image is generated through the scanning of even lines and a brightish image is generated through the scanning of odd lines. Further, the brightish image also can be generated by adding an even line image and an odd line image.

The image distributor 18 generates the brightish image and the darkish image by performing such the processing, and sends the brightish image to the first reader unit 16a and the darkish image to the second reader unit 16b. Further, the processings in the portions following the first and second reader units 16a, 16b are the same as those in the first embodiment described above and therefore, the explanation thereof will be omitted.

Scanning the barcode B by varying the exposing width using a line CCD camera, it is only necessary to change an exposure time of a CCD alternately for every line. For this purpose, it is enough to alternately change the pixel width in the sub-scanning direction. As a result, the scanning object, i.e, the barcode B is conveyed at a constant speed and the pixel width in the sub-scanning direction becomes a value of an exposure time times a conveying speed.

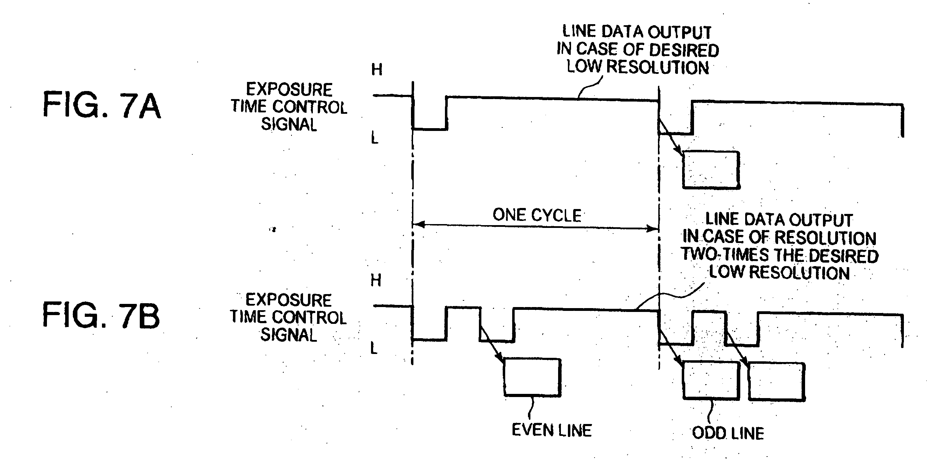

To change an exposure time alternately for every line, the camera controller 15, 15a or 15b generates an exposure time control signal as shown in FIG. 7. FIG. 7A shows an exposure time control signal and a line data output in case of a desired resolution degree (a low resolution degree) and a line data output. FIG. 7B shows an exposure time control signal in case of a resolution two times the desired low resolution and a line data output. Further, the camera 14, 14a or 14b exposes from the falling point from H-level (High level) to the L-level (Low-level) to the next falling point of the exposure time control signal and outputs the line data at that falling point.

Thus, the barcode B on the postal matter P is scanned at a resolution two-times the desired resolution and a brightish image and a darkish image are generated by scanning while varying the exposure time for the even lines and the odd lines, and the reading process is then performed. In case of the brightish image, the barcode B on the strongly breached postal matter P cannot be read but a barcode of a postal matter having a dark background can be read. In case of the darkish image the barcode B on the breach affected postal matter P can be read. Accordingly, as either one of images can be read, it is possible to cope with both aspects of the postal matter P by one scanning.

As described above, according to the present invention, it is possible to provide a luminous pattern scanning apparatus and a luminous pattern scanning method capable of surely scanning luminous patterns even for media of which luminous patterns marked thereon could not be scanned so far because of strong breach and influence of its background light when generating a first image of a prescribed brightness and a second image darker than the first image, and evaluate respective pattern scanning results by performing the pattern scanning process of these two images can be provided.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. Luminous pattern scanning apparatus **characterized in that** the apparatus comprises:
an image producing means to produce a first image in prescribed brightness and a second image darker than the first image from luminous pattern marked with fluorescent ink on a medium;
a scanning means to obtain the scanning consequences of the first image and the second image for the luminous patterns by making the pattern scanning process for the first image and the second imaged produced by the image producing means; and
a judging means to evaluate the first image scanning consequence and the second image scanning consequence obtained by the scanning means and a judging means to output a final one scanning consequence.

2. Luminous pattern scanning apparatus as claimed in claim 1, **characterized in that** the image producing means has two scanning means having different brightness of exciting light and produces a first image and a second image by scanning the medium with these two scanning means.

3. Luminous pattern scanning apparatus as claimed in claim 1 or 2, **characterized in that** the image producing means scans the medium by one scanning means with increasing a resolution increased to at least two-times, produces a first image from the whole pixels at a high resolution in the same area as one pixel at a prescribed resolution and produces a second image by thinning a part of whole pixels at a high resolution in the same area as one pixel at a desired low resolution.

4. Luminous pattern scanning apparatus as claimed in any one of the preceding claims, **characterized in that** the image producing means scans the medium by varying the pixel area and produces a first image and a second image by one scanning means.

5. Luminous pattern scanning apparatus as claimed in any one of the preceding claims, **characterized in that** the luminous pattern is a barcode marked with fluorescent ink.

6. Method for scanning luminous pattern **characterized in that** the method comprises the steps of:
producing a first image of a prescribed brightness and a second image darker than the brightness of the first image from luminous pattern marked on a medium in fluorescent ink emitting light upon receipt of exciting light;
performing the pattern scanning process for the produced first and the second images and producing the scanning consequence of the first image and the scanning consequence of the second image for the luminous pattern;
evaluating the produced first image scanning consequence and the second image scanning consequence; and
judging finally one scanning consequence.
